# EUROPEAN PATENT APPLICATION

(11) **EP 4 254 628 A1**
(43) Date of publication of application: **04.10.2023**
(21) Application number: 22779022.7
(22) Date of filing: 30.03.2022
(51) Int. Cl.: H01M 50/244, H01M 50/147

(54) **BATTERY PACK AND ELECTRIC VEHICLE**

(30) Priority: 30.03.2021 CN 202120653607 U
(71) Applicant: BYD Company Limited, Guangdong 518118 (CN)
(72) Inventor: GAO, Jian, Shenzhen, Guangdong Province, 518118 P.R. China Guangdong 518118 (CN); PENG, Qingbo, Shenzhen, Guangdong Province, 518118 P.R. China Guangdong 518118 (CN); E, Congji, Shenzhen, Guangdong Province, 518118 P.R. China Guangdong 518118 (CN); XIONG, Bojun, Shenzhen, Guangdong Province, 518118 P.R. China Guangdong 518118 (CN); JIANG, Yongjun, Shenzhen, Guangdong Province, 518118 P.R. China Guangdong 518118 (CN)
(74) Representative: Arnold & Siedsma
(86) International application number: PCT/CN2022/084078
(87) International publication number: WO 2022/206840

(57) **Abstract**

The present disclosure provides a battery pack and an electric vehicle. The battery pack includes a box, a sealing cover, a battery string, a sampling structure, and a battery information collector configured to be connected with a battery management system. The battery string and the sampling structure are arranged inside the box. The battery string includes multiple electrically connected batteries. The sampling structure includes multiple sampling lines. First ends of the sampling lines are connected with the corresponding batteries. Second ends of the sampling lines are connected with the battery information collector. The box is provided with an opening. The battery information collector is arranged at the opening of the box. The sealing cover is located on an outer side of the battery information collector. The sealing cover is configured to seal the opening of the box. Since the battery information collector in the present disclosure is arranged at the opening of the box, the internal space of the box is not occupied. Through the sealing cover, both the sealing of the box and the sealing of the battery information collector can be realized. In this way, the production costs can be reduced.

## Description

The present disclosure claims priority to Chinese Patent Application No. 202120653607.5, filed on March 30, 2021 and entitled "BATTERY PACK AND ELECTRIC VEHICLE". The entire content of the above-referenced application is incorporated herein by reference.

### FIELD

The present disclosure relates to the field of batteries, and specifically to a battery pack and an electric vehicle.

### BACKGROUND

In the related art, a sampling structure is configured to collect information such as a voltage and/or a temperature of a battery, and transmit the collected information to a battery information collector. The battery information collector converts the collected information and transmits the collected information to a battery management system.

Currently, the battery information collector is generally arranged on outside of a housing of a battery pack, which not only increases an overall structural size of the battery pack, but also requires separate sealing of the battery information collector, resulting in an increase in costs of the battery pack.

### SUMMARY

The content of the present disclosure is intended to resolve at least one technical problem in the related art. A first aspect of the present disclosure provides a battery pack. The battery pack includes a box, a sealing cover, a battery string, a sampling structure, and a battery information collector configured to be connected with a battery management system.

The battery string and the sampling structure are arranged inside the box. The battery string includes multiple electrically connected batteries. The sampling structure includes multiple sampling lines. First ends of the sampling lines are connected with the corresponding batteries. Second ends of the sampling lines are connected with the battery information collector.

The box is provided with an opening. The battery information collector is arranged at the opening of the box. The sealing cover is located on an outer side of the battery information collector. The sealing cover is configured to seal the opening of the box.

In some embodiments of the present disclosure, a partition plate is arranged in the box. The partition plate partitions an internal space of the box into multiple accommodating cavities. The battery string and the sampling structure are arranged in each of the accommodating cavities. The first ends of the sampling lines in the same accommodating cavity are connected with the corresponding batteries. The second ends of at least a part of the sampling lines in the accommodating cavity are connected with the battery information collector.

In some embodiments of the present disclosure, connection terminals are arranged on the second ends of the sampling lines. Multiple pads are arranged on the battery information collector. The connection terminals are welded to the pads in a one-to-one correspondence.

In some embodiments of the present disclosure, the battery pack further includes multiple fuses. Connection terminals are arranged on the second ends of the sampling lines. Multiple pads are arranged on the battery information collector. First ends of the fuses are welded to the corresponding connection terminals. Second ends of the fuses are welded to the corresponding pads.

In some embodiments of the present disclosure, the pads on the battery information collector correspondingly connected with the sampling lines in the same accommodating cavity are distributed in multiple rows in a first direction. The first direction is a height direction of the box.

The pads on the battery information collector correspondingly connected with the sampling lines in the multiple accommodating cavities are arranged in a second direction. The second direction is a length direction of the box or a width direction of the box.

In some embodiments of the present disclosure, first bendable portions are arranged on the second ends of the sampling lines. The connection terminals are arranged on the first bendable portions. The battery information collector is arranged on sides of the first bendable portions.

In some embodiments of the present disclosure, the multiple accommodating cavities are arranged in sequence in a second direction. The multiple batteries forming the battery string are arranged in sequence in a third direction and connected in series. The second direction is a length direction of the box, and the third direction is a width direction of the box. Alternatively, the second direction is the width direction of the box, and the third direction is the length direction of the box.

In some embodiments of the present disclosure, each of the batteries includes a first electrode and a second electrode. The first electrode and the second electrode are distributed on two opposite sides of the battery in the third direction. The first electrode of one battery of two batteries connected in series is connected with the second electrode of the other battery directly or through a conductive sheet.

Sampling terminals are arranged on the first ends of the sampling lines, and the sampling lines are connected with the first electrodes of the corresponding batteries through the corresponding sampling terminals.

Alternatively, sampling terminals are arranged on the first ends of the sampling lines, and the sampling lines are connected with the second electrodes of the corresponding batteries through the corresponding sampling terminals.

Alternatively, sampling terminals are arranged on the first ends of the sampling lines, and the sampling lines are connected with the corresponding conductive sheets through the corresponding sampling terminals.

In some embodiments of the present disclosure, second bendable portions are arranged on the first ends of the sampling lines. The second bendable portions of the sampling lines are located between two batteries connected in series. The sampling terminals are arranged on the second bendable portions.

In some embodiments of the present disclosure, the opening is provided on an end portion of the box in the third direction. A length of the battery information collector extends in the second direction. A width of the battery information collector extends in the first direction. The first direction is the height direction of the box. One of the second direction and the third direction is the length direction of the box. The other direction is the width direction of the box.

In some embodiments of the present disclosure, the sampling structure further includes a protective layer wrapped around the multiple sampling lines. The protective layer and the multiple sampling lines are constructed as a flexible printed circuit (FPC) or a flexible flat cable (FFC).

In some embodiments of the present disclosure, the battery pack further includes the battery management system and a connecting wire harness. The sealing cover includes a base and a cover body. The base is configured to seal the opening of the box. The cover body is connected with the base to form a sealed accommodating space. The battery management system is located in the accommodating space. The connecting wire harness extends through the base and is connected with the battery management system and the battery information collector.

In some embodiments of the present disclosure, the battery is a pouch battery.

In another aspect, the present disclosure further provides an electric vehicle, including a vehicle body and the battery pack in any of the above embodiments. The battery pack is fixed to the vehicle body, or the box of the battery pack is constructed as a part of the vehicle body.

Beneficial effects of the present invention are as follows: In the battery pack in this disclosure, the opening is provided on the box, and the battery information collector is arranged at the opening of the box, so that the internal space of the box is not occupied, which improves the space utilization of the battery pack. The sealing cover is arranged on the outer side of the battery information collector, and the sealing cover is configured to seal the opening of the box, so that both the sealing of the box and the sealing of the battery information collector can be realized through the sealing cover, thereby reducing a number of sealing structural members, reducing the production costs of the battery pack, improving the compactness of the structural design of the battery pack, and reducing the overall size of the battery pack. In addition, through the sampling lines, relevant information of the batteries may be collected, and the sampling information is transmitted to the battery information collector. The battery information collector converts the sampling information and then transmits the sampling information to the battery management system. In this way, a working status of the batteries may be monitored, thereby improving the safety of the battery pack.

Additional aspects and advantages of the present disclosure will be given in the following description, some of which will become apparent from the following description or may be learned from practices of the present disclosure.

### BRIEF DESCRIPTION OF THE DRAWINGS

FIG. 1 is a schematic structural diagram of a battery pack according to an embodiment of the present disclosure.
FIG. 2 is an exploded view of the battery pack according to an embodiment of the present disclosure.
FIG. 3 is another exploded view of the battery pack according to an embodiment of the present disclosure.
FIG. 4 is a partial enlarged view of a part A in FIG. 3.
FIG. 5 is a schematic diagram of connection between a sampling line and a battery according to an embodiment of the present disclosure.
FIG. 6 is an exploded view of FIG. 5.
FIG. 7 is a partial enlarged view of a part B in FIG. 6.
FIG. 8 is a schematic diagram of connection between the sampling line and a battery information collector according to an embodiment of the present disclosure.
FIG. 9 is a partial enlarged view of a part B in FIG. 8.
FIG. 10 is a schematic diagram of connection between the sampling line and the battery information collector according to another embodiment of the present disclosure.
FIG. 11 is a partial enlarged view of a part D in FIG. 10.
FIG. 12 is a schematic diagram of an electric vehicle according to an embodiment of the present disclosure.

### Reference numerals:

1000. Electric vehicle;
100. Battery pack; 200. Vehicle body;
10. Box; 101. Opening;
20. Sealing cover; 201: Base; 202. Cover body;
30. Battery string; 301. Battery; 302. First electrode; 303. Second electrode;
40. Sampling structure; 401. Sampling line; 402. Connection terminal; 403. Sampling terminal; 404. First bendable portion; 405. Second bendable portion; 406. Protective layer; 407. Through hole; 4011: First end; 4012: Second end;
50. Battery information collector; 501. Pad;
60. Partition plate;
70. Accommodating cavity;
80. Insulating support;
90. Fuse.

### DETAILED DESCRIPTION

Embodiments of the present disclosure are described in detail below, and examples of the embodiments are shown in drawings. The same or similar elements or the elements having same or similar functions are denoted by the same or similar reference numerals throughout the description. The embodiments described below with reference to the drawings are exemplary and used only for explaining the present disclosure, and should not be construed as a limitation on the present disclosure.

In the description of the present disclosure, it is to be understood that orientation or position relationships indicted by terms such as "center", "longitudinal", "transverse", "length", "width", "thickness", "upper", "lower", "front", "rear", "left", "right", "vertical", "horizontal", "top", "bottom", "interior", "exterior", "axial", and "circumferential" are based on orientation or position relationships shown in the drawings, are merely used to facilitate the description of the present disclosure and simplify the description, instead of indicating or implying that the indicated apparatus or element needs to have particular orientations or be constructed and operated in particular orientations, and therefore cannot be construed as a limitation on the present disclosure.

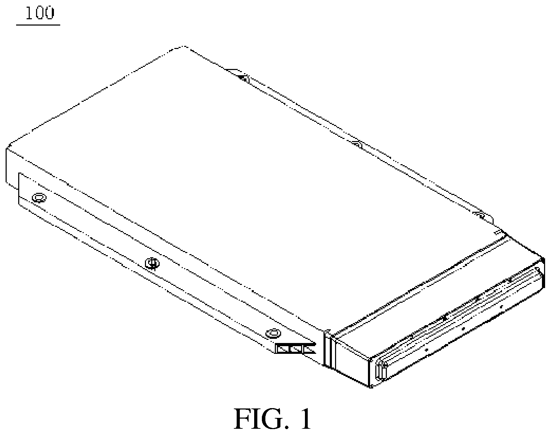

As shown in FIG. 1 to FIG. 7, the present disclosure provides a battery pack 100, including a box 10, a sealing cover 20, a battery string 30, a sampling structure 40, and a battery information collector 50 configured to be connected with a battery management system. The battery string 30 and the sampling structure 40 are arranged inside the box 10. The battery string 30 includes multiple electrically connected batteries 301. The sampling structure 40 includes multiple sampling lines 401. First ends 4011 of the sampling lines 401 are connected with the corresponding batteries 301. Second ends 4012 of the sampling lines 401 are connected with the battery information collector 50. The box 10 is provided with an opening 101. The battery information collector 50 is arranged at the opening 101 of the box 10. The sealing cover 20 is located on an outer side of the battery information collector 50. The sealing cover 20 is configured to seal the opening 101 of the box 10.

The outer side of the battery information collector 50 is a side of the battery information collector 50 facing away from the internal space of the box 10. The first ends of the sampling lines 401 are connected with the corresponding batteries 301, and the second ends 4012 of the sampling lines 401 are connected with the battery information collector 50, so that the sampling lines 401 may collect relevant information of the batteries 301 and transmit the relevant information to the battery information collector 50. The battery information collector 50 converts the relevant information and then transmits the relevant information to the battery management system. In this way, a working status of the batteries 301 may be monitored, thereby improving the safety of the battery pack 100.

In the battery pack 100 provided in this disclosure, the opening 101 is provided on the box 10, and the battery information collector 50 is arranged at the opening 101 of the box 10, so that the internal space of the box 10 is not occupied, which improves the space utilization of the battery pack 100. The sealing cover 20 is arranged on the outer side of the battery information collector 50, and the sealing cover 20 is configured to seal the opening 101 of the box 10, so that both the sealing of the box 10 and the sealing of the battery information collector 50 can be realized through the sealing cover 20, thereby reducing a number of sealing structural members, reducing the production costs of the battery pack 100, improving the compactness of the structural design of the battery pack 100, and reducing the overall size of the battery pack 100.

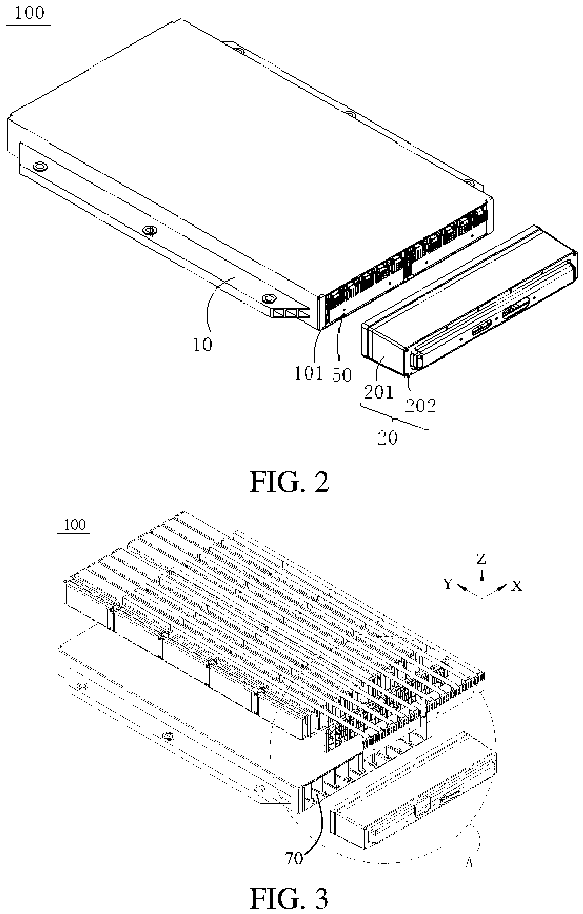

In some embodiments, as shown in FIG. 3 to FIG. 6, a partition plate 60 is arranged in the box 10. The partition plate 60 partitions an internal space of the box 10 into multiple accommodating cavities 70. The battery string 30 and the sampling structure 40 are arranged in each of the accommodating cavities 70. The first ends 4011 of the sampling lines 401 in the same accommodating cavity 70 are connected with the corresponding batteries 301. The second ends 4012 of at least a part of the sampling lines 401 in the accommodating cavity 70 are connected with the battery information collector 50. In this way, the information collected by the sampling lines 401 within the multiple accommodating cavities 70 can be converted through only one battery information collector 50, thereby reducing a number of battery information collectors 50 in the battery pack 100, and reducing the costs of the battery pack 100. As shown in FIG. 3, the sampling lines 401 within five of the accommodating cavities 70 are connected with one battery information collector 50. Certainly, in other embodiments, the sampling lines 401 within all of the accommodating cavities 70 are connected with one battery information collector 50.

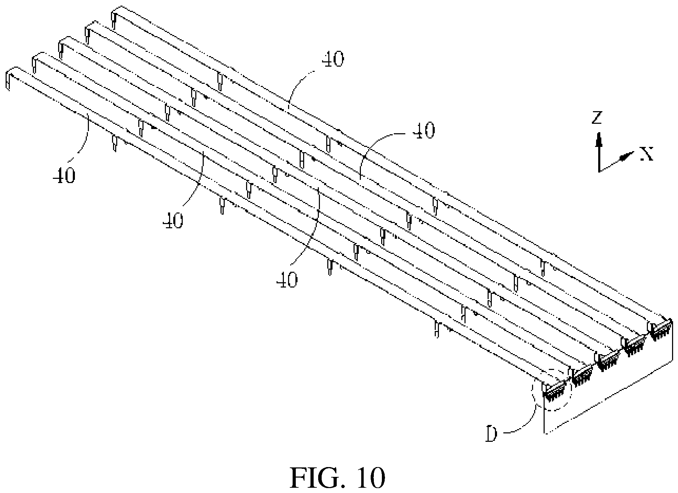

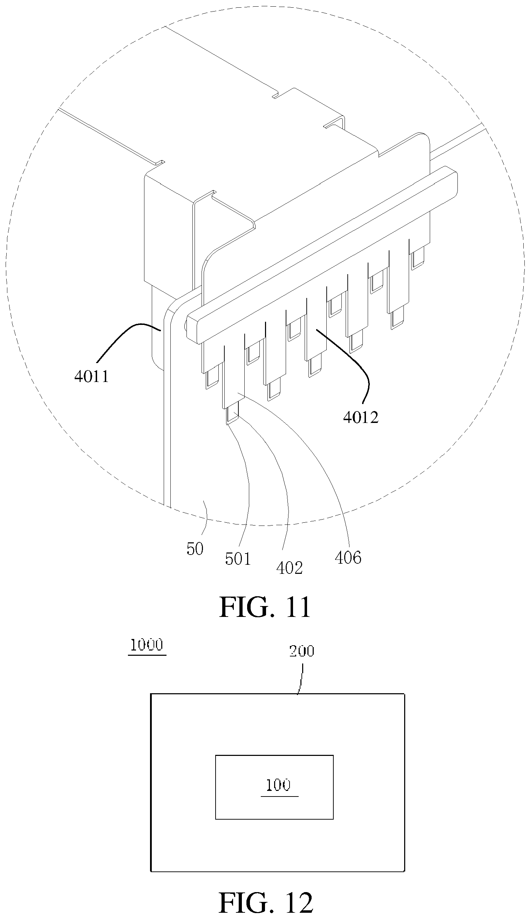

In some embodiments, as shown in FIG. 10 and FIG. 11, connection terminals 402 are arranged on the second ends 4012 of the sampling lines 401. Multiple pads 501 are arranged on the battery information collector 50. The connection terminals 402 are welded to the pads 501 in a one-to-one correspondence. Through welding, the reliability of the connection between the sampling lines 401 and the battery information collector 50 can be ensured, which is simple and reduces the costs. Certainly, in other embodiments, the sampling lines 401 may be connected with the battery information collector 50 through insertion.

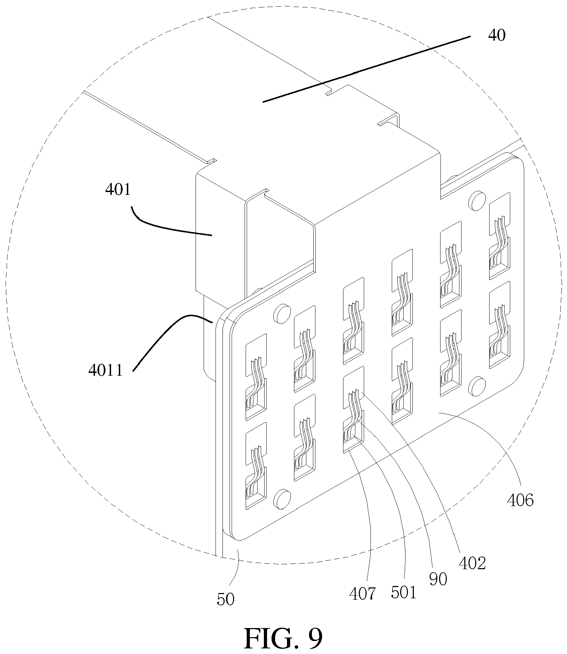

In some other embodiments, as shown in FIG. 9, the battery pack 100 further includes multiple fuses 90. Connection terminals 402 are arranged on the second ends 4012 of the sampling lines 401. Multiple pads 501 are arranged on the battery information collector 50. First ends of the fuses 90 are welded to the corresponding connection terminals 402. Second ends of the fuses 90 are welded to the corresponding pads 501. Through the fuses 90, not only the connection between the sampling lines 401 and the battery information collector 50 can be realized, but also overcurrent protection can be realized, which reduces a number of structural components, reduce the costs of the battery pack 100, and ensure the safety of the entire sampling circuit.

As shown in FIG. 9, the battery information collector 50 is located on a side of the sampling structure 40. Multiple pads 501 are arranged on a side of the battery information collector 50 facing the sampling structure 40, multiple through holes 407 are provided on the sampling structure 40, the connection terminals 402 are located on a side of the sampling structure 40 facing away from the battery information collector 50, and the fuses 90 extend through the through holes 407 and are welded to the pads 501.

In some embodiments, as shown in FIG. 3, FIG. 4, and FIG. 9, the pads 501 on the battery information collector 50 correspondingly connected with the sampling lines 401 in the same accommodating cavity 70 are distributed in multiple rows in a first direction. The first direction is a height direction of the box 10. The pads 501 on the battery information collector 50 correspondingly connected with the sampling lines 401 in the multiple accommodating cavities 70 are arranged in a second direction. The second direction is a length direction of the box 10 or a width direction of the box 10. In this way, the arrangement of the pads 501 on the battery information collector 50 can be more compact, which reduces a size of the battery information collector 50 and reduces the costs.

The first direction is a direction Z in FIG. 3, and the width direction of the battery information collector 50 may be the same as the first direction. The second direction is a direction X in FIG. 3, and the length direction of the battery information collector 50 may be the same as the second direction.

It may be understood that when the battery pack 100 is mounted to a vehicle body 200 of an electric vehicle 1000, the height direction of the box 10 may be the same as a height direction of the electric vehicle 1000, the length direction of the box 10 may be the same as a length direction of the electric vehicle 1000, and the width direction of the box 10 may be the same as the length direction of the electric vehicle 1000. Alternately, the length direction of the box 10 may be the same as a width direction of the electric vehicle 1000, and the width direction of the box 10 may be the same as the length direction of the electric vehicle 1000.

In some embodiments, as shown in FIG. 3, FIG. 4, and FIG. 5, the multiple accommodating cavities 70 are arranged in sequence in the second direction. The multiple batteries 301 forming the battery string 30 are arranged in sequence in a third direction and connected in series. The second direction is the length direction of the box 10, and the third direction is the width direction of the box 10. Alternatively, the second direction is the width direction of the box 10, and the third direction is the length direction of the box 10. The second direction is the direction X in FIG. 3, and the third direction is a direction Y in FIG. 3.

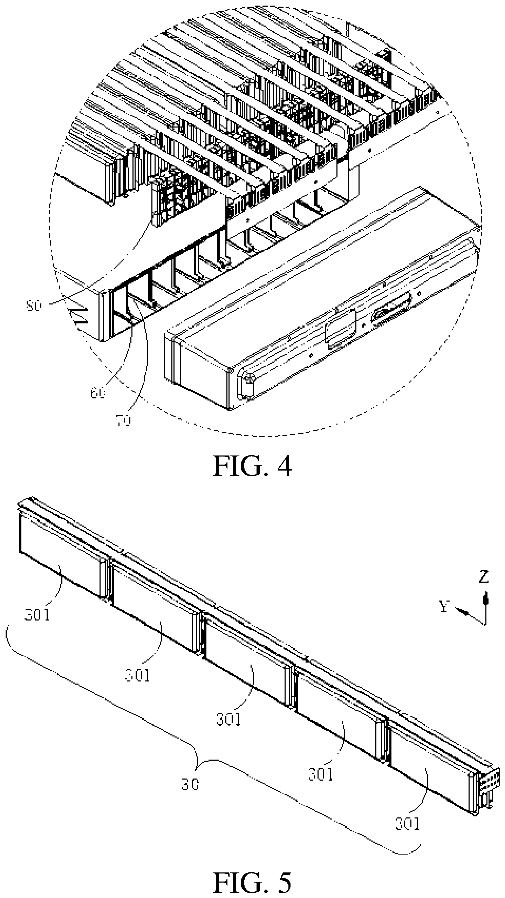

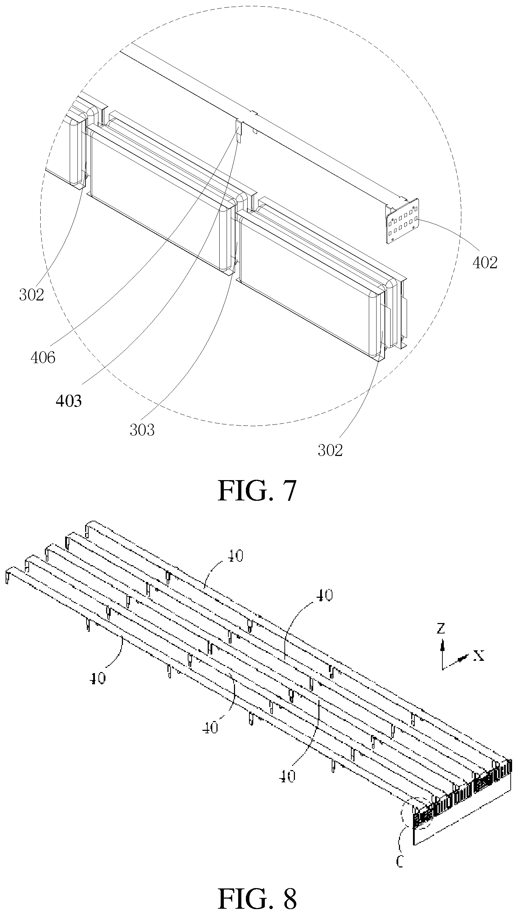

As shown in FIG. 5 and FIG. 7, each of the batteries 301 includes a first electrode 302 and a second electrode 303. The first electrode 302 and the second electrode 303 are distributed on two opposite sides of the battery 301 in the third direction. The first electrode 302 of one battery 301 of two batteries connected in series 301 is connected with the second electrode 303 of the other battery 301 directly or through a conductive sheet.

In some embodiments, sampling terminals 403 are arranged on the first ends 4011 of the sampling lines 401. The sampling lines 401 are connected with the first electrodes 302 of the corresponding batteries 301 through the corresponding sampling terminals 403.

In some other embodiments, a difference from the above embodiments is that the sampling lines 401 are connected with the second electrodes 303 of the corresponding batteries 301 through the corresponding sampling terminals 403.

In some other embodiments, a difference from the above embodiments is that the sampling lines 401 are connected with the corresponding conductive sheets through the corresponding sampling terminals 403.

In some embodiments, as shown in FIG. 3 and FIG. 5, the sampling structures 40 within the multiple accommodating cavities 70 are arranged in the second direction, and the sampling structures 40 within the same accommodating cavity 70 are located on a side of the battery string 30 in the first direction. The first direction is the height direction of the box 10, and the second direction is the length direction or the width direction of the box 10.

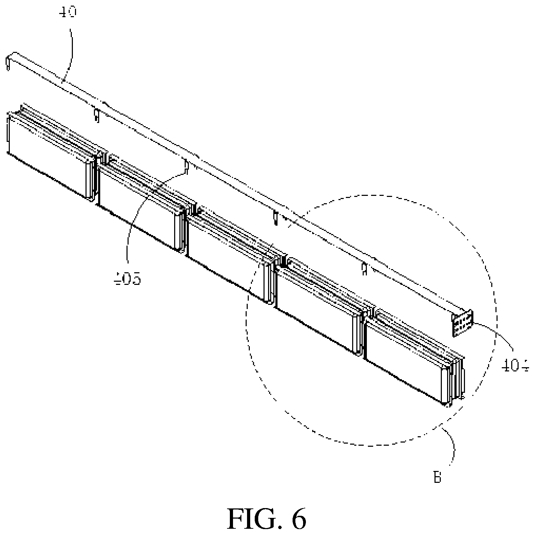

In some embodiments, as shown in FIG. 6 to FIG. 9, first bendable portions 404 are arranged on the second ends 4012 of the sampling lines 401. The connection terminals 402 are arranged on the first bendable portions 404. The battery information collector 50 is arranged on sides of the first bendable portions 404. Adopting the bendable structure design on the sampling lines 401 facilitates welding of the sampling lines to the battery information collector 50.

In some embodiments, as shown in FIG. 6 and FIG. 7, second bendable portions 405 are arranged on the first ends 4011 of the sampling lines 401. The second bendable portions 405 of the sampling lines 401 are located between two batteries 301 connected in series. The sampling terminals 403 are arranged on the second bendable portions 405. Adopting the structural design facilitates the connection between the sampling lines 401 and the first electrodes 302 or the second electrodes 303 or the conductive sheets.

In some embodiments, as shown in FIG. 9, multiple avoidance ports are provided on a protective layer 406. Parts of the sampling lines 401 exposed from the corresponding avoidance ports form the connection terminals 402.

In some other embodiments, as shown in FIG. 11, the sampling structure 40 further includes protective layers 406 wrapped around the multiple sampling lines 401. First parts of the sampling lines 401 extend out of the protective layers 406 to form the connection terminals 402. The sampling lines 401 are metal conductors.

In some embodiments, as shown in FIG. 6 and FIG. 7, the sampling structure 40 further includes protective layers 406 wrapped around the multiple sampling lines 401. Second parts of the sampling lines 401 extend out of the protective layers 406 to form the sampling terminals 403.

In some other embodiments, the second parts of the sampling lines 401 are exposed from the protective layers 406 and are welded to the sampling terminals 403.

The sampling lines 401 are metal conductors, and the connection terminals 402 are metal sheets. In addition, the sampling lines 401 may be formed by etching or die-cutting of metal foil.

In some embodiments, the sampling structure 40 further includes a protective layer 406 wrapped around the multiple sampling lines 401. The protective layer 406 and the multiple sampling lines 401 are constructed as a flexible printed circuit (FPC) or a flexible flat cable (FFC).

The FPC includes metal foil and protective films covering two sides of the metal foil. The metal foil is etched to form the multiple sampling lines 401, and the protective films forms the protective layer 406.

The FFC includes multiple metal conductors and insulating films covering two sides of the metal conductors. The metal conductors are bonded between the two insulating films. The metal conductors form the sampling lines 401, and the insulating films form the protective layer 406.

In some embodiments, one sampling structure 40 and multiple electrically connected battery strings 30 are arranged in the accommodating cavity 70, and the sampling lines 401 in the same accommodating cavity 70 are correspondingly connected with the batteries 301 forming the multiple battery strings 30. In this way, the sampling lines 401 within the same accommodating cavity 70 may sample the batteries 301 within the accommodating cavity 70, thereby simplifying the arrangement of the sampling lines 401 within each accommodating cavity 70.

In some embodiments, the multiple battery strings 30 within the same accommodating cavity 70 are arranged in the second direction and connected in series.

It should be noted that: connection between two batteries 301 in two battery strings 30 connected in series is similar to connection between two batteries 301 in the battery string 30 connected in series, and connection between the sampling lines 401 and the two batteries 301 in the two battery strings 30 connected in series is similar to connection between the sampling lines 401 and the two batteries 301 in the battery string 30 connected in series. Details are not described herein. For example, two battery strings 30 are arranged in the same accommodating chamber 70, and the two battery strings 30 in the same accommodating chamber 70 are arranged in the first direction and connected in series.

Certainly, the multiple battery strings 30 within the same accommodating chamber 70 may alternatively be arranged in sequence in the second direction and connected in parallel.

In some embodiments, as shown in FIG. 2 to FIG. 4, the opening 101 is provided on an end portion of the box 10 in the third direction. A length of the battery information collector 50 extends in the second direction. A width of the battery information collector 50 extends in the first direction. The first direction is the height direction of the box 10. One of the second direction and the third direction is the length direction of the box 10. The other direction is the width direction of the box 10.

In some embodiments, as shown in FIG. 2, the battery pack 100 further includes the battery management system and a connecting wire harness. The sealing cover 20 includes a base 201 and a cover body 202. The base 201 is configured to seal the opening 101 of the box 10. The cover body 202 is connected with the base 201 to form a sealed accommodating space. The battery management system is located in the accommodating space. The connecting wire harness extends through the base 201 and is connected with the battery management system and the battery information collector 50. Through the sealing cover 20, both the sealing of the box 10 and the sealing of the battery management system can be realized, thereby reducing a number of sealing structural members and reducing the costs.

In some embodiments, as shown in FIG. 2 to FIG. 4, the battery pack 100 further includes an insulating support 80 arranged at the opening 101 of the box 10, and the battery information collector 50 is fixed to an outer side of the insulating support 80. The outer side of the insulating support 80 is a side of the insulating support 80 facing away from the internal space of the box 10.

In some embodiments, the battery 301 is a pouch battery. Certainly, in other embodiments, the battery 301 may be a cylindrical battery. Alternatively, a housing of the battery 301 may be a metal housing.

In another aspect, as shown in FIG. 12, the present disclosure further provides an electric vehicle 1000, including a vehicle body 200 and the above battery pack 100. The battery pack 100 is fixed to the vehicle body 200, or the box 10 of the battery pack 100 is constructed as a part of the vehicle body 200. In the electric vehicle 1000 provided in this disclosure, the opening 101 is provided on the box 10 of the battery pack 100, and the battery information collector 50 is arranged at the opening 101 of the box 10, so that the internal space of the box 10 is not occupied, which improves the space utilization of the battery pack 100. The sealing cover 20 is arranged on the outer side of the battery information collector 50, and the sealing cover 20 is configured to seal the opening 101 of the box 10, so that both the sealing of the box 10 and the sealing of the battery information collector 50 can be realized through the sealing cover 20, thereby reducing a number of sealing structural members, reducing the production costs of the battery pack 100, improving the compactness of the structural design of the battery pack 100, and reducing the overall size of the battery pack 100. In addition, through the sampling lines 401, relevant information of the batteries 301 may be collected, and the sampling information is transmitted to the battery information collector 50. The battery information collector 50 converts the sampling information and then transmits the sampling information to the battery management system. In this way, a working status of the batteries 301 may be monitored, thereby improving the safety of the battery pack 100.

In the description of the present disclosure, it should be noted that unless otherwise explicitly specified and defined, terms "mount", "connect", and "connection" should be understood in a broadest sense, for example, a fixed connection, a detachable connection, an integral connection, or may be a mechanical connection or an electrical connection; or may be a direct connection, an indirect connection through a middle medium, or interior communication between two elements. A person of ordinary skill in the art may understand the specific meanings of the terms in the present disclosure according to specific situations.

In the description of this specification, description with reference to terms such as "an embodiment", "specific embodiments", or "an example", means in combination with the embodiment or example including specific features, structures, materials, or features described in at least one embodiment or example of the present disclosure. In this specification, schematic descriptions of the above terms do not necessarily refer to the same embodiment or example. In addition, the described specific features, structures, materials, or characteristics may be combined in a proper manner in any one or more embodiments or examples.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A battery pack (100), the battery pack (100) comprising a box (10), a sealing cover (20), a battery string (30), a sampling structure (40), and a battery information collector (50) configured to be connected with a battery management system,
the battery string (30) and the sampling structure (40) being arranged inside the box (10); the battery string (30) comprising a plurality of electrically connected batteries (301); the sampling structure (40) comprising a plurality of sampling lines (401); first ends (4011) of the sampling lines (401) being connected with the corresponding batteries (301); second ends (4012) of the sampling lines (401) being connected with the battery information collector (50);
the box (10) being provided with an opening (101); the battery information collector (50) is arranged at the opening (101) of the box (10); the sealing cover (20) being located on an outer side of the battery information collector (50); and the sealing cover (20) being configured to seal the opening (101) of the box (10).

2. The battery pack (100) according to claim 1, wherein a partition plate (60) is arranged in the box (10); the partition plate (60) partitions an internal space of the box (10) into a plurality of accommodating cavities (70); the battery string (30) and the sampling structure (40) are arranged in each of the accommodating cavities (70); the first ends (4011) of the sampling lines (401) in the same accommodating cavity (70) are connected with the corresponding batteries (301); and the second ends (4012) of at least a part of the sampling lines (401) in the accommodating cavity (70) are connected with the battery information collector (50).

3. The battery pack (100) according to claim 2, wherein connection terminals (402) are arranged on the second ends (4012) of the sampling lines (401); a plurality of pads (501) are arranged on the battery information collector (50); and the connection terminals (402) are welded to the pads (501) in a one-to-one correspondence.

4. The battery pack (100) according to claim 2, wherein the battery pack (100) further comprises a plurality of fuses (90); connection terminals (402) are arranged on the second ends (4012) of the sampling lines (401); a plurality of pads (501) are arranged on the battery information collector (50); first ends of the fuses (90) are welded to the corresponding connection terminals (402); and second ends of the fuses (90) are welded to the corresponding pads (501).

5. The battery pack (100) according to claim 3 or 4, wherein the pads (501) on the battery information collector (50) correspondingly connected with the sampling lines (401) in the same accommodating cavity (70) are distributed in a plurality of rows in a first direction; the first direction is a height direction of the box (10);
the pads (501) on the battery information collector (50) correspondingly connected with the sampling lines (401) in the plurality of accommodating cavities (70) are arranged in a second direction; and the second direction is a length direction of the box (10) or a width direction of the box (10).

6. The battery pack (100) according to claim 3 or 4, wherein first bendable portions (404) are arranged on the second ends (4012) of the sampling lines (401); the connection terminals (402) are arranged on the first bendable portions (404); and the battery information collector (50) is arranged on sides of the first bendable portions (404).

7. The battery pack (100) according to claim 2, wherein the plurality of accommodating cavities (70) are arranged in sequence in a second direction; the plurality of batteries (301) forming the battery string (30) are arranged in sequence in a third direction and connected in series; the second direction is a length direction of the box (10); and the third direction is a width direction of the box (10); or the second direction is the width direction of the box (10); and the third direction is the length direction of the box (10).

8. The battery pack (100) according to claim 7, wherein each of the batteries (301) comprises a first electrode (302) and a second electrode (303); the first electrode (302) and the second electrode (303) are distributed on two opposite sides of the battery (301) in the third direction; the first electrode (302) of one battery (301) of two batteries connected in series (301) is connected with the second electrode (303) of the other battery (301) directly or through a conductive sheet;
sampling terminals (403) are arranged on the first ends (4011) of the sampling lines (401); and the sampling lines (401) are connected with the first electrodes (302) of the corresponding batteries (301) through the corresponding sampling terminals (403); or
sampling terminals (403) are arranged on the first ends (4011) of the sampling lines (401); and the sampling lines (401) are connected with the second electrodes (303) of the corresponding batteries (301) through the corresponding sampling terminals (403); or
sampling terminals (403) are arranged on the first ends (4011) of the sampling lines (401); and the sampling lines (401) are connected with the corresponding conductive sheets through the corresponding sampling terminals (403).

9. The battery pack (100) according to claim 8, wherein second bendable portions (405) are arranged on the first ends (4011) of the sampling lines (401); the second bendable portions (405) of the sampling lines (401) are located between two batteries connected in series; and the sampling terminals (403) are arranged on the second bendable portions (405).

10. The battery pack (100) according to any of claims 1 to 9, wherein the opening (101) is provided on an end portion of the box (10) in the third direction; a length of the battery information collector (50) extends in the second direction; a width of the battery information collector (50) extends in the first direction; the first direction is the height direction of the box (10); one of the second direction and the third direction is the length direction of the box (10); and the other direction is the width direction of the box (10).

11. The battery pack (100) according to any of claims 1 to 9, wherein the sampling structure (40) further comprises a protective layer (406) wrapped around the plurality of sampling lines (401); and the protective layer (406) and the plurality of sampling lines (401) are constructed as a flexible printed circuit (FPC) or a flexible flat cable (FFC).

12. The battery pack (100) according to any of claims 1 to 9, wherein the battery pack (100) further comprises the battery management system and a connecting wire harness; the sealing cover (20) comprises a base (201) and a cover body (202); the base (201) is configured to seal the opening (101) of the box (10); the cover body (202) is connected with the base (201) to form a sealed accommodating space; the battery management system is located in the accommodating space; and the connecting wire harness extends through the base (201) and is connected with the battery management system and the battery information collector (50).

13. The battery pack (100) according to any of claims 1 to 9, wherein the battery is a pouch battery.

14. An electric vehicle (1000), comprising a vehicle body (200) and the battery pack (100) according to any of claims 1 to 13, the battery pack (100) being fixed to the vehicle body; or the box (10) of the battery pack (100) being constructed as a part of the vehicle body.
